# EUROPÄISCHE PATENTSCHRIFT

(11) **EP 1 051 236 B1**
(45) Veröffentlichungstag und Bekanntmachung des Hinweises auf die Patenterteilung: **07.05.2003**
(21) Anmeldenummer: 99932415.5
(22) Anmeldetag: 19.01.1999
(51) Int. Cl.: B01D 67/00, B01D 71/50, B29C 44/34

(54) **GESCHÄUMTE PORÖSE MEMBRANEN AUS THERMOPLASTISCHEN POLYMEREN SOWIE VERFAHREN UND VORRICHTUNG ZU IHRER HERSTELLUNG**
EXPANDED POROUS THERMOPLASTIC POLYMER MEMBRANES AND METHOD AND DEVICE FOR THE PRODUCTION THEREOF
MEMBRANES POREUSES EXPANSEES CONSTITUEES DE POLYMERES THERMOPLASTIQUES, ET LEUR PROCEDE ET DISPOSITIF DE PRODUCTION

(30) Priorität: 29.01.1998 DE 19803362
(43) Veröffentlichungstag der Anmeldung: 15.11.2000
(73) Patentinhaber: SARTORIUS AG, 37075 Göttingen (DE)
(72) Erfinder: Klötzer, Rebecca, 37075 Göttingen (DE)
(86) Internationale Anmeldenummer: EP9900286
(87) Internationale Veröffentlichungsnummer: WO99038604

(56) Entgegenhaltungen:
- EP-A- 0 463 759
- EP-A- 0 707 935
- WO-A-96/38221
- WO-A-97/06935
- WO-A-97/17129
- US-A- 5 120 770

## Beschreibung

Die Erfindung betrifft geschäumte poröse Membranen aus thermoplastischen Polymeren, die sich durch ein hohes Hohlraumvolumen und eine hohe Offenzelligkeit auszeichnen, sowie ein Verfahren und eine Vorrichtung zur Herstellung dieser Membranen.
Die geschäumten porösen Membranen sind anwendbar zur Filtration von Fluiden im Mikro- und Makrofiltrationsbereich, insbesondere zur Vor- und Endfiltration von flüssigen Medien in der Industrie, in Labors und im Umweltschutzbereich.
Gemäß der WO 97/06935 lassen sich durch Extrusion überwiegend geschlossenzellige mikro- und supermikrozelluläre Polymerschäume herstellen mit Zellgrößen von unter 0,1 µm und Zelldichten von mindestens 1,56^{·}10¹⁴ Zellen/cm³ (supermikrozelluläre Polymerschäume) sowie mit Zellgrößen unter 100 µm und Zelldichten von mehr als 10⁸ Zellen/cm³ (mikrozelluläre Polymerschäume). Das mit einem Extrusionssystem durchgeführte Verfahren unterscheidet die Schritte a) Ausbildung einer einphasigen Polymer/Gas-Lösung unter Druck, b) Ausbilden der Keime für Gaszellen (Zellnukleierung) durch Druckabfall und c) Realisieren von Zellwachstum. Wesentlich soll die Verwendung einer Zahnradpumpe als Drosselventil zwischen dem Extruderausgang und der Düse sein, wodurch der Druckabfall gesteuert werden kann.

Nach der WO 92/17533 sollen sich geschäumte Folien aus einem zu schäumenden Polymer und einem superkritischen Fluid erzeugen lassen. Die erreichbaren Zellgrößen sollen geringer als 1 µm und die Zelldichten zwischen 10⁹ bis 10¹⁵ Zellen/cm³ sein. Nach dem sehr aufwendigen Verfahren wird die Folie über einen Extruder mit Schlitzdüse erzeugt, ein superkritisches Fluid (z.B. CO₂) in einer Druckkammer bei Raumtemperatur zugegeben, durch die die Folie über Rollen geführt wird, die Nukleierung beim Übertritt in eine weitere Kammer bei Normaldruck durchgeführt und ein Zellwachstum in dieser Kammer bei höherer Temperatur (>190° C) mittels Hindurchleiten der Folie zwischen Wärmeaustauschern und gegebenenfalls durch Tempern erreicht. Alternativ dazu kann das superkritische Fluid auch innerhalb des Extruders direkt in die Polymerschmelze vor der Verformung durch die Düse zugegeben werden.
In der WO 89/00918 wird die Herstellung geschlossenzelliger mikrozellulärer Schäume aus semikristallinen Polymeren, wie Polypropylen und Polyethylen mit Zellgrößen von etwa 1 bis 100 µm beschrieben. Nach dem Verfahren wird das Polymer bei erhöhtem Druck und oberhalb der Schmelztemperatur mit Gas gesättigt, das Polymermaterial mittels Extrusionsdüse oder Spritzguß verformt, der Druck für die Zellnukleierung und Schaumbildung reduziert, und zur Verfestigung des Polymerschaums die Temperatur bis unterhalb der Schmelztemperatur verringert.
In der US-PS 4,473,665 wird die Herstellung geschlossenzelliger mikrozellulärer Schäume aus amorphen Polymeren, wie Polystyren, Polyester, Nylon und Polycarbonat mit Zellgrößen etwa 2 bis 25 µm und einem Hohlraumvolumen von 5-30% offenbart. Nach dem Verfahren wird das Polymer bei erhöhtem Druck und oberhalb der Schmelztemperatur mit Gas gesättigt, das Polymermaterial mittels Extrusionsdüse oder Spritzguß verformt, der Druck für die Zellnukleierung und Schaumbildung reduziert und zur Verfestigung des Polymerschaums die Temperatur bis unterhalb des Schmelzpunktes verringert.
Derartige Polymerschäume sind für Membranen allerdings noch ungeeignet, da sie aufgrund der Geschlossenzelligkeit keinen oder bestenfalls einen sehr geringen Durchfluß für ein zu filtrierendes Medium aufweisen, ein zu geringes Hohlraumvolumen besitzen und sich zudem Fehlstellen durch ein unkontrolliertes Zellwachstum nicht ausschließen lassen. Ein weiterer Nachteil besteht darin, daß die geschlossenzelligen Polymerschäume in einem weiteren Verfahren in ein offenzelliges Material umgewandelt werden müßten, um brauchbare Membranmaterialien zu erhalten. In der EP-A1 0 754 488 wird zwar ein derartiges Verfahren zur Erzeugung offenzelliger Mikrofiltrationsmembranen aus geschlossenzelligen Polymerschäumen beschrieben, bei seiner Durchführung besteht aber die Gefahr der Entstehung von Bruchstellen. Gemäß dieser EP-A1 werden die Materialstege zwischen den Zellen der geschlossenzelligen Polymerschäume durch Komprimieren und Verstrecken des Polymerschaums bei unterschiedlichen Temperaturen aufgebrochen. So sollen die beschriebenen Flachmembranen aus Polypropylen mit einer Dicke zwischen 2 und 200 µm ein Verhältnis B/A zwischen Zellgröße (A) und Wanddicke (B) der Zellen des Polymerschaums von weniger als 0,5 aufweisen bei einem Hohlraumanteil von nicht weniger als 50%.
Aus der WO 96/38221 ist ein Verfahren zur Herstellung von geschäumten Polymer-Hohlfadenmembranen bekannt. Nach dem Verfahren wird ein geschmolzenes Polymer durch eine Extrusionseinrichtung hindurchgeführt, und die Schmelze wird vor Eintritt in eine die Schmelze formende Spinndüse unter Druck mit Gas beladen. Durch den Druckabfall beim Austritt aus der Düse findet das Aufschäumen der Polymerschmelze unter Ausbildung einer porösen Hohlfadenmembran statt. Durch Verstrecken der Hohlfadenmembran bei erhöhter Temperatur wird die Hohlfadendimension (Wandstärke) eingestellt. Die Temperatur der Schmelze wird in der Extrusionseinrichtung so reguliert, daß sie bei amorphen Polymeren oberhalb der Glasübergangstemperatur und bei teilkristallinen Polymeren oberhalb der Schmelztemperatur liegt. Die Größe und die Form der Poren sollen durch die Extrusionsparameter wie Druck, Temperatur, Schneckenform und Geschwindigkeit sowie Düsenform der Extrusionseinheit steuerbar und einstellbar sein. Nach diesem Verfahren lassen sich Schaumstrukturen mit einer Porengröße im Bereich von 10-20 µm und Zelldichten von ca. 10¹⁰ Zellen/cm³ erreichen. Es handelt sich dabei um überwiegend geschlossenzellige Schäume mit einer zufälligen Offenzelligkeit zwischen 5 und 40 %. Nachteilig ist, daß sich nach diesem Verfahren lediglich Hohlfadenmembranen mit einem für technische Anwendungen zu geringen Hohlraumvolumen und mit zu geringen Durchflüssen herstellen lassen und sich zudem Fehlstellen durch unkontrolliertes Zellwachstum nicht ausschließen lassen.

Die Aufgabe der Erfindung besteht darin, fehlstellenfreie geschäumte Membranen aus thermoplastischen Polymeren zu schaffen, die über ein großes Hohlraumvolumen und eine hohe Offenzelligkeit bei enger Porengrößenverteilung verfügen, sowie ein kontinuierliches Verfahren zu ihrer Herstellung und eine Vorrichtung zur Durchführung des Verfahrens vorzuschlagen.

Die Aufgabe wird erfindungsgemäß durch die im Haupt- und in den Nebenansprüchen angegebenen Merkmale gelöst. Vorteilhafte Weiterbildungen der Erfindung sind durch die Merkmale in den untergeordneten Ansprüchen wiedergegeben.

Bei dem erfindungsgemäßen Verfahren wird eine Polymerschmelze aus mindestens einem amorphen und/oder teilkristallinen Polymer unter Druck durch einen Extruder einer Extrusionseinrichtung gefördert, dabei in einer Injektionsstufe mit einem Zellbildner beladen, und durch eine die Membran formende Düse gedrückt, wobei der Zellbildner unter dem beim Passieren der Düse eintretenden Druckabfall die Polymerschmelze unter Ausbildung einer überwiegend offenen zellulären Struktur in dem mindestens einen Polymer aufschäumt. Der Druck soll im Extruder mindestens 150 bar betragen und die Temperatur wird bei amorphen Polymeren und Polymerblends mindestens auf die Glasübergangstemperatur, bei teilkristallinen Polymeren und Polymerblends mindestens auf die Schmelztemperatur derart eingestellt, daß die Viskosität der Polymerschmelze ein einwandfreies Arbeiten des Extruders erlaubt. Die Glasübergangs- und die Schmelztemperatur sollen als ursprüngliche Erweichungstemperatur und die Temperatur, bei der ein einwandfreies Arbeiten des Extruders gewährleistet ist, soll als ursprüngliche Verarbeitungstemperatur bezeichnet werden.
In einer zusätzlichen Mischstufe, die sich vor der Düse befindet, wird eine einphasige Schmelze aus dem mindestens einen Polymer und dem Zellbildner erzeugt, wobei die Schmelze außerdem auf eine Temperatur unterhalb der ursprünglichen Verarbeitungstemperatur des mindestens einen Polymers gesenkt und/oder ihr Druck erhöht wird. Überraschenderweise wurde gefunden, daß durch das erfindungsgemäße Erzeugen einer einphasigen Schmelze in der zusätzlichen Mischstufe Membranen erhältlich sind, die keinerlei Fehlstellen aufweisen und über ein hohes Maß an Homogenität bezüglich der Zellgröße verfügen.

Normalerweise wird man nur soviel an Zellbildner zugeben, wie sich bei dem Druck und der Temperatur im Polymeren ohne Ausbildung von Gasblasen lösen kann, denn ein Überschuß an Zellbildner würde üblicherweise Gasblasen ausbilden, die in die Schmelze hineingerührt werden würden. Sie würden sich aber in der Schmelze nicht mehr lösen. Bei der Schaumnukleierung durch den späteren Druckabfall diffundiert das im Polymer gelöste Gas in diese bereits vorhandenen Gasblasen hinein und vergrößert sie erheblich. Außerdem bilden sich unter diesen Bedingungen keine oder nur wenige neue Gasblasen. Dies ist thermodynamisch begründet, weil für die Schaffung neuer Oberflächen Energie aufgewendet werden muß und die Diffusion in bereits vorhandenen Gasblasen energetisch günstiger ist als die Ausbildung neuer Gasblasen. Man erhält lediglich ein geschäumtes Polymer, das über relativ wenig Zellen verfügt, die in ihrer Größe im Bereich mehrerer 100 µm liegen und zudem stark voneinander abweichen. Derartig geschäumte Polymere sind aufgrund der Zellgröße und der großen Uneinheitlichkeit der Zellen für Membranen ungeeignet.

Mittels des Merkmals der Erfindung, wonach innerhalb der zusätzlichen Mischstufe die Schmelze auf eine Temperatur unterhalb der ursprünglichen Verarbeitungstemperatur des mindestens einen Polymer gesenkt und/oder ihr Druck erhöht wird, sind geschäumte Membranen erhältlich, die sich durch ein hohes Hohlraumvolumen von mindestens 75 % auszeichnen. Ein derartig großes Holraumvolumen ist eine der wirtschaftlichen Voraussetzungen für den Einsatz der Membranen in Anwendungen, die hohe Durchflußleistungen erfordern.
Bei geringeren Temperaturen und höheren Drücken kann ein höherer Gehalt an Zellbildner in die Schmelze eingebracht werden, ohne daß nicht gelöste Gasblasen in der Schmelze zurückbleiben, die, wie vorstehend beschrieben, negative Effekte verursachen würden. Dieser höhere Gehalt an Zellbildner führt zur Ausbildung einer größeren Anzahl von Gasblasen während der Zellnukleierung. Die Absenkung der Temperatur der Schmelze und /oder die Erhöhung des Drucks in der zusätzlichen Mischstufe erlaubt es, in der Injektionsstufe mehr an Zellbildner in die Polymerschmelze zu injizieren als bei den dort herrschenden Temperatur- und Druckverhältnissen in ihr gelöst werden kann, weil dieser Überschuß nachträglich während der Behandlung in der zusätzlichen Mischstufe vollständig in Lösung gebracht wird. Dadurch wird das Verfahren bezüglich des Gehalts an Zellbildnern in der Schmelze und damit des Hohlraumvolumens und der Zelldichte der Membranen steuerbar.
Generell ist die Temperatur der Polymerschmelze auch vorgegeben durch die notwendige Viskosität mit der der Extruder wirtschaftlich und gerätetechnisch noch betrieben werden kann. In der zusätzlichen Mischstufe wird aber der Erweichungseffekt des in der Schmelze gelösten Zellbildners ausgenutzt. Weil mit steigendem Gehalt an Zellbildner die ursprüngliche Erweichungstemperatur des Polymeren sinkt, kann in der zusätzlichen Mischstufe nach Zugabe von Zellbildnern, wie beispielsweise CO₂ die Verarbeitungstemperatur gegenüber der ursprünglichen Verarbeitungstemperatur um bis zu 100 °C und mehr erniedriegt werden, ohne daß die Viskosität steigt. Dabei sollte die Temperatur wenigstens um 50 °C erniedriegt werden, um deutliche Effekte zu erzielen.

Durch die zusätzliche Mischstufe wird außerdem sichergestellt, daß sich keine, insbesondere vom Zellbildner hervorgerufene Gasblasen in der Polymerschmelze befinden.
Die zusätzliche vor der Düse angeordnete Mischstufe kann z.B. in Form eines Kaskadenextruders eingerichtet oder in einer bevorzugten Ausführungsform der Erfindung innerhalb der Extrusionsstrecke zwischen Extruder und Düse ausgebildet werden. Als zusätzliche Mischstufe wird ein Wärmeaustauschrohr verwendet. Dieses wird zwischen zwei Schmelzepumpen geschaltet, wodurch die Extrusionstrecke ohne Druckverlust verlängert wird. Außerdem kann durch die beiden Schmelzepumpen im Wärmeaustauschrohr ein sehr hohes Druckniveau von 600 bar und mehr aufgebaut werden, welches unabhängig ist vom Extruderinnendruck und dem dort herrschenden Drehmoment der Extruderschnecken. Das Wärmeaustauschrohr ist neben Heiz- auch mit Kühlelementen ausgestattet, um die Extrusionsmasse der einphasigen Schmelze abzukühlen. In einer bevorzugten Ausführungsform der Erfindung ist die zusätzliche Mischstufe als statischer Mischer ausgebildet.

Der Druck in der Düse ist abhängig vom Strömungswiderstand und kann durch die Strömungsgeschwindigkeit der Extrusionsmasse der einphasigen Schmelze mittels der Schmelzepumpe vor der Düse, sowie der Schmelzetemperatur gesteuert werden. Er kann dabei auch größer sein als der Druck in dem Wärmeaustauschrohr. Als Schmelzepumpen werden vorzugsweise Zahnradpumpen vor dem Einlaß und Auslaß der zusätzlichen Mischstufe eingesetzt. Durch den Druckabfall beim Austritt aus der Düse findet das Aufschäumen der Polymerschmelze statt. Als Düsen zur Ausformung der Membranen aus der einphasigen Schmelze werden im Falle der Herstellung von Flachmembranen Schlitzdüsen in der erforderlichen Membranbreite oder im Falle der Herstellung von Rohrmembranen und Hohlfasermembranen Hohlkerndüsen verwendet. Bei den Hohlkerndüsen wird vorteilhafterweise ein unter Druck stehendes Gas, beispielsweise Preßluft, als Lumenfüller verwendet.

Überraschenderweise wurde gefunden, daß die nach dem erfindungsgemäßen Verfahren hergestellten geschäumten polymeren Membranen über eine große Offenporigkeit verfügen, wenn als Zellbildner, mit denen die Polymerschmelze beladen wird, Stoffe verwendet werden, die unter Normalbedingungen aus mindestens zwei Gasen oder aus mindestens zwei niedrig siedenden Flüssigkeiten oder aus einem Gemisch eines Gases und einer niedrig siedenden Flüssigkeit mit unterschiedlichen Diffusionsgeschwindigkeiten gegenüber der Polymerschmelze bestehen. Die Zellbildner sollen sich gegenüber den verwendeten Polymeren in der Extrusionsmasse zumindest weitgehend inert verhalten. Bevorzugt werden Kohlendioxid und Wasser eingesetzt.

Eine Zellöffnung findet unter den Bedingungen des erfindungsgemäßen Verfahrens vermutlich deshalb statt, weil der innere Zelldruck die durch Viskosität und Oberflächenspannung bedingte mechanische Festigkeit der Zellwände überwindet und zu einem Reißen der Zellwände führt. Offenbar sind bei den zunächst entstehenden Schäumen die Zellwände der Schaumzellen sehr dünn, weil erfindungsgemäß eine hohe Zelldichte und ein hohes Hohlraumvolumen erzeugt wird und die Hauptpolymermasse sich außerdem in den Stegen des Zellgerüstes befindet. Beim Einsatz eines Gasgemisches von mindestens zwei Gasen mit unterschiedlichen Diffusionsgeschwindigkeiten führt offenbar das Gas mit der geringeren Diffusionsgeschwindigkeit zu einem starken inneren Zelldruck, der die geschlossenen Zellen aufbricht.

Bei Verarbeitungstemperaturen oberhalb 100°C (Temperatur der gasbeladenen Extrusionsmasse der einphasigen Schmelze) wird bevorzugt Wasser als eine von mindestens zwei Komponenten des Zellbildners eingesetzt und zum Erzeugen der Poren durch Öffnen der Zellen verwendet. Bei einem Gemisch von inertem Gas und Wasser als Zellbildner wird offenbar bei Austritt der Polymerschmelze aus der Düse und gleichzeitigem Druckabfall durch das einsetzende Sieden des Wassers ein zusätzlicher Zelldruck hervorgerufen, der ausreicht, um die geschlossenen Zellen aufzubrechen.
In bevorzugter Weise wird die Extrusionsmasse mit verflüssigten Zellbildnern beladen, Für eine genaue Dosierung der Zellbildner werden der verflüssigten Zellbildner beispielsweise mit Hilfe von Präzisionsflüssigdosierpumpen in die strömende Polymerschmelze injiziert. So kann, im Falle von Kohlendioxid als einer der mindestens zwei Zellbildnern, durch Benutzung eines Rückstauventils hinter der Pumpe mit ihr das CO₂ aus der Gasflasche mit einem Druck von 57 bar komprimiert, verflüssigt, flüssig dosiert und in die Polymerschmelze während der Extrusion injiziert werden. Der Pumpenkopf muß dabei auf eine konstante Temperatur von unterhalb 14 °C, bevorzugterweise -10 °C thermostatisiert werden, um eine konstante Dichte des flüssigen CO₂ aufrechtzuerhalten als Voraussetzung für eine konstante Flüssigdosierung.

Die Einleitung der Zellbildner kann mittels einer Kanüle durch ein Sintermetall hindurch erfolgen, das vorzugsweise Porengrößen von ca. 20 µm und kleiner aufweist, um an der Phasengrenze Flüssigkeit/ bzw. Gas/Polymer eine möglichst große Kontaktoberfläche zu erhalten.

Nach der Erfindung sind amorphe und teilkristalline thermoplastische Polymere und Gemische daraus einsetzbar, die ausgewählt werden aus der Gruppe der Cellulosederivate und der Polyolefine, Polyester Polysulfone, Polyethersulfone, Polyamide und ihrer Substitutionsprodukte, wie beispielsweise Polyvinylidenfluorid. Besonders bevorzugt ist die Gruppe der Polyester, Polysulfone und Polyethersulfone.

Erhältlich sind Membranen im Mikro- und Makrofiltrationsbereich mit mittleren Porendurchmessern zwischen 0,05 um bis 30 µm beziehungsweise zwischen 10 µm bis 200 µm. Die Membranen verfügen über ein Hohlraumvolumen von mindestens 75 %, eine Offenzelligkeit von mindestens 80 % und eine Porengrößenverteilung mit einer Standardabweichung von +/- 10 % des mittleren Porendurchmessers.

Das Hohlraumvolumen in Prozent berechnet sich nach der Formel (1 - Rohdichte/Polymerdichte) • 100. Die Rohdichte ist definiert als Schaummasse pro Volumeneinheit und wurde durch Wägung der Masse und der Berechnung des Volumens aus der linearen Abmessung eines geeigneten Probekörpers bestimmt.
Die Offenzelligkeit d.h. der Anteil an offenen Poren in Prozent wurde mit Hilfe eines Luftvergleichspyknometers gemessen. Bei dieser Methode läßt sich durch den Vergleich eines geometrischen Volumens eines Probekörpers mit einem Referenzvolumen bei gleichem Druck die Luftverdrängung durch den Schaumstoff ermitteln, d.h. dasjenige Volumen, welches den geschlossenen Zellen einschließlich der Schaummasse entspricht. Der Fehler, der sich durch angeschnittenene Zellen in der Oberfläche ergibt, wurde durch Messungen an Probekörpern mit variierendem Oberflächen-/Volumenverhältnis korrigiert. Die Offenzelligkeit wurde bestimmt durch Extrapolation der gemessenen Offenzelligkeit auf ein Oberflächen-/Volumenverhältnis von Null.

Die Porengrößenverteilung wurde aus dem Verlauf der Luftdurchflußkurven als Funktion des Druckes an der benetzten Membrane, deren Poren mit Wasser gefüllt waren, bestimmt. Der Luftdurchfluß wurde mit Hillfe eines Coulter-Porosimeters gemessen.

Die Membranen können unverstärkt und verstärkt sein. Zur Herstellung verstärkter Flachmembranen wird die Polymerschmelze beispielweise direkt auf ein Verstärkungsmaterial extrudiert, das an der Düse vorbei- oder zwischen zwei Düsen hindurchgeführt wird. In einer weiteren Ausführungsform der Erfindung werden die verstärkten Membranen durch ein- oder beidseitiges Laminieren hergestellt. Die Verstärkungsmaterialien können ein- oder beidseitig eine geschäumte Membran tragen oder eine geschäumte Membran einseitig oder beidseitig verstärken. Als Verstärkungsmaterialien kommen Folien, Gewebe, Gewirke oder Vliese aus metallischen oder polymeren Materialien in Frage, bevorzugt werden Materialien aus Polymerfasern, deren Polymer der gleichen Polymergruppe angehört, wie das Membranpolymer. In einer bevorzugten Ausführungsform der Erfindung bestehen die Polymerfasern aus einem ersten hochschmelzbaren und hochfesten Kernpolymer, dessen Oberfläche vollständig oder teilweise von einem zweiten Polymer bedeckt ist. Derartig aufgebaute Membranen sind besonders formstabil. Das zweite Polymer hat einen geringeren Schmelzpunkt als das erste Kernpolymer und ist chemisch beständig. Vorzugsweise gehört es der gleichen Polymergruppe an wie das Membranpolymer.

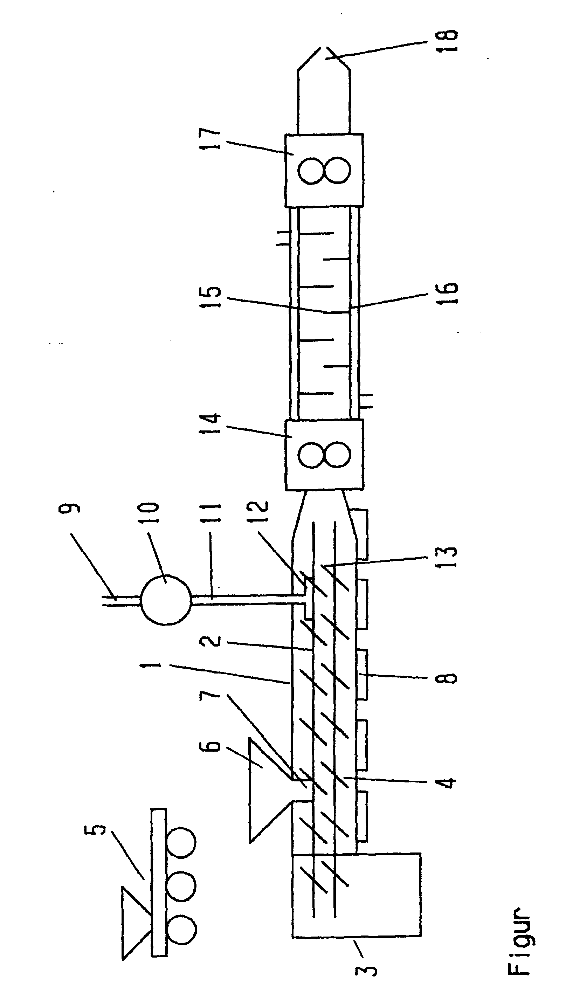

Die Erfindung wird anhand der Figur und des Ausführungsbeispiels näher erläutert.
Dabei zeigt die Figur schematisch einen Schnitt durch eine erfindungsgemäße Vorrichtung zur Durchführung des Verfahrens zur Herstellung geschäumter poröser Membranen aus thermoplastischen Polymeren.

Die Vorrichtung gemäß der Figur verfügt über einen Extruder **1**, ausgestattet mit einer gleichlaufenden Doppelschnecke **2**, deren Verhältnis Länge zu Durchmesser beispielsweise 30 beträgt und welche durch einen Antrieb **3** in einem Zylinder **4** rotiert. Das mindestens eine Polymer für die Extrusionsmasse wird typischerweise in Granulatform durch eine Dosiervorrichtung **5** dosiert und gelangt über einen Fülltrichter **6** in eine Einzugsöffnung **7** des Extruders **1.** Durch Rotation der Doppelschnecke **2** wird das Polymergranulat durch den Zylinder **4** gefördert. Dabei wird dem Polymergranulat durch getrennt von einander einstellbare Heizelemente **8** Wärme zugeführt und zu einer Polymerschmelze aufgeschmolzen. Etwa im Bereich zwischen dem zweiten und letzten Drittels der Länge des Zylinders **4** befindet sich eine als Injektionsstufe ausgebildete Zuführ für Zellbildner **9** , die aus einer Hochdruckpräzisionsdosierpumpe **10,** sich daran anschließender Kanüle **11,** die vorzugsweise über eine Sinterplatte **12** in den Zylinder **4** mündet. Aufbau und Form der Doppelschnecke **2** sind so gewählt, daß längs des Zylinders **4** ein Druckaufbau erfolgt. Der Druck am Ort der Zuleitung der Zellbildner in die Polymerschmelze durch die Kanüle **11** hindurch ist einstellbar durch das Füllvolumen der Extrusionsmasse im Zylinder **4** und der Drehzahl der Doppelschnecke **2** und kann bis zu 200 bar erreichen. Nach Zufuhr des Zellbildners gelangt die Extrusionsmasse im letzten Drittel der Länge des Zylinders **4** in eine erste Mischzone **13,** in der durch üblicherweise verwendete Scherelemente in der Schnecke **2** eine Durchmischung der Polymerschmelze erfolgt. Der Zylinder **4** ist in Fließrichtung der Extrusionsmasse aus der Polymerschmelze durch eine erste Schmelzepumpe **14** begrenzt. Die erste Schmelzepumpe ist mit einem Wärmeaustauschrohr einer zusätzlichen Mischstufe **15** verbunden, so daß die Extrusionsmasse der Polymerschmelze mittels der ersten Schmelzepumpe **14** in das Wärmeaustauschrohr der zusätzlichen Mischstufe **15** gefördert wird, welches mit einem regelbaren Heiz- und Kühlsystem **16** ausgestattet und von einer zweiten Schmelzepumpe **17** begrenzt ist. Die Schmelzepumpen sind vorzugsweise als Zahnradpumpe ausgebildet. Während des Transportes durch das Wärmeaustauschrohr der zusätzlichen Mischstufe **15** wird eine einphasige Schmelze erzeugt, und die Polymerschmelze wird auf eine gewünschte Temperatur bis auf unterhalb der ursprünglichen Erweichungstemperatur abgekühlt. Mittels Steuerung der Schmelzepumpen **14, 17** wird der Druck der Polymerschmelze auf einen gewünschten Wert von bis zu 600 bar und mehr eingestellt. Die Schmelzepumpe **17** ist mit einer die Membran formende Düse **18** verbunden. Durch die Schmelzepumpe **17** wird die Polymerschmelze in die Düse **18** gefördert, welche die Extrusionsmasse in der gewünschten Weise verformt. Durch eintretenden Druckabfall bei Austritt aus der Düse **18** wird die Polymerschmelze zu der Membran aufgeschäumt. Über in der Figur nicht dargestellte Sensoren, Meß- und Regelelemente für Druck, Temperatur, Dosiergeschwindigkeit für Polymergranulat, Drehzahl der Schnecke und Schmelzepumpen kann die Vorrichtung rechnergestützt im automatischen Regime betrieben werden.

### Ausführungsbeispiel

Das Ausführungsbeispiel wird mit einer Vorrichtung gemäß der Figur durchgeführt. Ein Granulat von Polycarbonat wird durch die Dosiervorrichtung **5** in den auf 245 °C aufgeheizten Extruder **1** bei einer Drehzahl der Doppelschnecke **2** von 30 U/min eingetragen und durch die Vorrichtung geführt. Durch die bei der Extrusion gebildete Wärme erwärmt sich die Polycarbonatschmelze auf etwa 260 °C (ursprüngliche Verarbeitungstemperatur). Das Druckprofil innerhalb des Extruders **1** wurde durch Regulieren der Eintragsgeschwindigkeit über die Dosiervorrichtung **5,** der Drehzahl der ersten Zahnradpumpe **14** und der Drehzahl der zweiten Zahnradpumpe **17** so gewählt, daß sich am Ort der Injektion der Zellbildner durch die Kanüle **11** ein Druck von 150 bar und innerhalb des Wärmeaustauschrohres der zusätzlichen Mischstufe **15** ein Druck von 400 bar aufgebaut haben. Dann wurden bei konstanter Eintragsgeschwindigkeit die Drehzahlen der Zahnradpumpen **14** und **17** derartig eingestellt, das ein konstanter Massenfluß von 20 g/min durch die Extrusionseinrichtung erfolgt. Dadurch bleibt das eingestellte Druckniveau ebenfalls konstant. Nun wird über die Hochdruckpräzisionsdosierpumpe **10** ein Gemisch von Kohlendioxid und Wasser als Zellbildner im Gewichtsverhältnis von 9:1 in die fließende Extrusionsmasse der Polymerschmelze injiziert. Die injizierte Menge an Zellbildner pro Zeiteinheit entspricht dabei 15 Gew.-% der geförderten Extrusionsmasse pro Zeiteinheit. Nach Beginn der Injektion des Zellbildners, wurde die Temperatur im Wärmeaustauschrohr **15** von anfangs 245 °C Werkzeugtemperatur herabgesetzt. Das Absenken der Temperatur wurde in kleinen Schritten von ca. 10 °C durchgeführt, innerhalb der die Viskosität der Extrusionsmasse, gemessen anhand der Drehmomente, annähernd konstant blieb. Mit abnehmender Temperatur stieg dabei die gelöste Menge an Zellbildner, gleichzeitig erniedrigte sich dadurch die Glasübergangstemperatur aufgrund des Erweichungeffektes. Dadurch ließ sich wiederum die Verarbeitungstemperatur senken, was zu einem erneuten Anstieg der gelösten Gasmenge führte. Die Temperatur der Extrusionsmasse wurde so von anfangs 260 °C im vor der Zahnradpumpe **14** liegenden Bereich des Zylinders **4** auf ungefähr 150°C im Wärmeaustauschrohr **15** der zusätzlichen Mischzone herabgesetzt. Die Polymerschmelze wurde dann durch eine Breitschlitzdüse **18** bei einer Werkzeugtemperatur von 220 °C zu einer Flachfolie mit einer Breite von 40 cm verformt, wobei aufgrund des Druckabfalls beim Extrudieren der Extrusionsmasse durch die Düse die Polymerschmelze aufgeschäumt wurde.
Die so hergestellte Flachmembran mit einer Dicke von 0.4 mm weist eine Zelldichte (Porendichte) von 10¹⁴ Zellen pro cm³, bei einer mittleren Zellgröße von 0.5 µm (± 0.03 µm) auf. Ihr Hohlraumvolumen beträgt 82 % bei einer Offenzelligkeit von 91 %. Der Durchfluß für Wasser beträgt ungefähr 120 ml/(min cm² bar). Sie hat einen Bubble Point von ca. 1.9 bar.

Liste der Bezugszeichen:
Extruder **1**
Doppelschnecke **2**
Antrieb **3**
Zylinder **4**
Dosiervorrichtung **5**
Fülltrichter **6**
Einzugsöffnung **7**
Heizelemente **8**
Injektionsstufe zur Zufuhr für Zellbildner **9**
Hochdruckpräzisionsdosierpumpe **10**
Kanüle **11**
Sinterplatte **12**
erste Mischzone **13**
erste Schmelzepumpe **14**
Wärmeaustauschrohr der zusätzlichen Mischstufe **15**
Heiz- und Kühlsystem **16**
zweite Schmelzepumpe **17**
Düse **18**

## Patentansprüche

1. Geschäumte poröse Membranen aus thermoplastischen Polymeren,
**dadurch gekennzeichnet, daß**
die Membranen
eine Offenzelligkeit von mindestens 80 %,
ein Hohlraumvolumen von mindestens 75 % und
eine offenporige Porengrößenverteilung mit einer Standardabweichung von +/-10 % des mittleren Porendurchmessers
aufweisen.

2. Geschäumte poröse Membranen nach Anspruch 1,
**dadurch gekennzeichnet, daß**
die Membranen Porendurchmesser im Mikrofiltrationsbereich zwischen 0,05 µm und 30 µm aufweisen.

3. Geschäumte poröse Membranen nach Anspruch 1,
**dadurch gekennzeichnet, daß**
die Membranen Porendurchmesser im Makrofiltrationsbereich zwischen mehr als 30 µm bis 200 µm aufweisen.

4. Geschäumte poröse Membranen nach den Ansprüchen 1 bis 3,
**dadurch gekennzeichnet, daß**
die Membranen ein- oder beidseitig verstärkt sind.

5. Geschäumte poröse Membranen nach den Ansprüchen 1 bis 4,
**dadurch gekennzeichnet, daß**
die Membranen aus mindestens einem thermoplastischen Polymer bestehen, das ausgewählt wird aus der Gruppe der Cellulosederivate, der Polyolefine, Polyester Polysulfone, Polyethersulfone, Polyamide und ihrer Substitutionsprodukte.

6. Verfahren zur Herstellung geschäumter poröser Membranen aus thermoplastischen Polymeren, in dem eine Polymerschmelze aus mindestens einem amorphen und/oder teilkristallinen Polymer bei einer ursprünglichen Verarbeitungstemperatur, die oberhalb der Erweichungstemperatur des mindestens einen Polymers liegt, unter einem Druck von mindestens 150 bar durch einen Extruder (1) gefördert, dabei in einer Injektionsstufe (9) mit Zellbildner beladen und durch eine die Membran formende Düse (18) gedrückt wird, wobei der Zellbildner unter dem beim Passieren der Düse (18) eintretenden Druckabfall die Polymerschmelze aus dem mindestens einen Polymer aufschäumt,
**dadurch gekennzeichnet, daß**
a) in der Injektionsstufe (9), die im Bereich zwischen dem zweiten und letzten Drittel des Zylinders (4) des Extruders (1) liegt, ein Überschuß an Zellbildner in die Polymerschmelze injeziert wird bezogen auf die in diesem Bereich herrschenden Temperatur- und Druckverhältnisse und als Zellbildner mindestens zwei Gase oder mindestens zwei niedrig siedende Flüssigkeiten oder ein Gemisch eines Gases und einer niedrig siedenden Flüssigkeit mit unterschiedlichen Diffusionsgeschwindigkeiten gegenüber der Polymerschmelze verwendet werden beziehungsweise wird,
b) die mit dem Überschuß an Zellbildner beladene Polymerschmelze in einer ersten Mischzone (13), die sich von der Injektionsstufe bis zum Ende des Zylinders (4) erstreckt, unter einem längs des Zylinders (4) ansteigenden Druck befördert und durchmischt wird,
c) die durchmischte Polymerschmelze durch eine zusätzliche. Mischstufe (15) gefordert wird, welche mit einem regelbaren Heiz- und Kühlsystem ausgestattet und von einer ersten und einer zweiten Schmelzepumpe (14, 17) begrenzt ist, wobei eine einphasige Schmelze erzeugt wird, welche
d) in der zusätzlichen Mischstufe (15) auf eine Temperatur unterhalb der ursprünglichen Verarbeitungstemperatur des mindestens einen Polymers gesenkt und/oder ihr Druck mittels der ersten und zweiten Schmelzepumpe (14, 17) erhöht wird bevor sie
e) mittels der zweiten Schmelzepumpe (17) mit einem einstellbaren Druck durch die Düse (18) gedrückt wird.

7. Verfahren nach Anspruch 6,
**dadurch gekennzeichnet, daß**
in der zusätzlichen Mischstufe (15) die Schmelze auf eine Temperatur von mindestens 50 °C, vorzugsweise auf mindestens 100 °C unterhalb der ursprünglichen Verarbeitungstemperatur des mindestens einen Polymers gesenkt wird.

8. Verfahren nach Anspruch 6,
**dadurch gekennzeichnet, daß**
in der zusätzlichen Mischstufe (15) der Druck der Schmelze auf mehr als 150 bar, vorzugsweise auf mindestens 400 bar erhöht wird.

9. Verfahren nach Anspruch 6,
**dadurch gekennzeichnet, daß**
die Polymerschmelze mit verflüssigten Zellbildnern beladen wird.

10. Verfahren nach den Ansprüchen 6 und 9,
**dadurch gekennzeichnet, daß**
die Polymerschmelze mit Kohlendioxid und Wasser als Zellbildner beladen wird.

11. Verfahren nach den Ansprüchen 6 bis 10,
**dadurch gekennzeichnet, daß**
die Polymerschmelze aus mindestens einem thermoplastischen Polymer erzeugt wird, das ausgewählt wird aus der Gruppe der Cellulosederivate, der Polyolefine, Polyester Polysulfone, Polyethersulfone, Polyamide und ihrer Substitutionsprodukte.

12. Vorrichtung zur Durchführung des Verfahrens nach Anspruch 6 bestehend aus einem mit einer Dosiervorrichtung (5) für Polymere und Heizelementen (8) ausgestatteten Extruder (1) mit Zylinder (4), der über eine erste Schmelzepumpe (14) mit einer Düse (18) zur Extrusion einer Membran verbunden ist und vor der ersten Schmelzepumpe (14) eine Injektionsstufe (9) zur Beladung der Polymerschmelze mit Zellbildnern besitzt,
**dadurch gekennzeichnet, daß**
die Injektionsstufe (9) im Bereich zwischen dem zweiten und letzten Drittel der Länge des Zylinders (4) angeordnet ist und
zwischen der ersten Schmelzepumpe (14) und der Düse (18) ein von einer zweiten Schmelzepumpe (17) zur Düse (18) hin begrenztes, mit einem regelbaren Heizund Rühlsystem ausgestattetes Wärmeaustauschrohr zur Ausbildung einer zusätzlichen Mischstufe (15) für die Bildung einer einphasigen Schmelze installiert ist und zwischen der zweiten Schmelzepumpe und der Düse ein vom Druck innerhalb der zusätzlichen Mischstufe verschiedener Druck einstellbar ist.

13. Vorrichtung nach Anspruch 12,
**dadurch gekennzeichnet, daß**
das Wärmeaustauschrohr (15) mit Mischelementen für die Polymerschmelze ausgerüstet ist, vorzugsweise in Form eines statischen Mischers.

14. Vorrichtung nach Anspruch 12,
**dadurch gekennzeichnet, daß**
die Injektionsstufe aus Dosierpumpen (10) besteht, die über Kanülen (11) und Sinterplatte (12) mit dem Zylinder (4) des Extruder (1) kommuniziernd verbunden sind.

15. Vorrichtung nach Anspruch 12,
**dadurch gekennzeichnet, daß**
die Dosierpumpen (10) für eine Dosierung von verflüssigten Zellbildnern mit kühlbaren Pumpenköpfen ausgerüstet sind.

16. Vorrichtung nach Anspruch 12,
**dadurch gekennzeichnet, daß**
die Düse (18) zur Extrusion von Flachmembranen als Breitschlitzdüse ausgebildet ist.

## Claims

1. Foamed porous membranes of thermoplastic polymers, **characterised in that** the membranes have an open cellularity of at least 80%, a void volume of at least 75% and an open-pore pore size distribution with a standard deviation of ± 10% of the mean pore diameter.

2. Foamed porous membranes according to claim 1, **characterised in that** the membranes have a pore diameter in the microfiltration range between 0.05 µm and 30 µm.

3. Foamed porous membranes according to claim 1, **characterised in that** the membranes have a pore diameter in the macrofiltration range between more than 30 µm to 200 µm.

4. Foamed porous membranes according to claims 1 to 3, **characterised in that** the membranes are reinforced at one side or both sides.

5. Foamed porous membranes according to claims 1 to 4, **characterised in that** the membranes consist of at least one thermoplastic polymer selected from the group consisting of cellulose derivatives, polyolefines, polyesters, polysulfones, polyethersulfones, polyamides and substitute products thereof.

6. Method of producing foamed porous membranes of thermoplastic polymers, in which a polymer melt consisting of at least one amorphous and/or partly crystalline polymer at an original processing temperature, which lies above the softening temperature of the at least one polymer, is conveyed under a pressure of at least 150 bars through an extruder (1), then charged in an injection stage (9) with a cell former and forced through a nozzle (18) forming the membrane, wherein the cell former foams the polymer melt consisting of the at least one polymer under the pressure decay occurring on passing the nozzle (18),
**characterised in that**
a) in the injection stage (9), which lies in the region between the second and last third of the cylinder (4) of the extruder (1), an excess of cell former, with respect to the temperature and pressure conditions prevailing in this region, is injected into the polymer melt and as cell former there are or is used at least two gases or at least two liquids of low boiling point or a mixture of a gas and a liquid with a low boiling point and different speeds of diffusion relative to the polymer melt,
b) the polymer melt charged with the excess of cell former is conveyed and thoroughly mixed in a first mixing zone (13), which extends from the injection stage to the end of the cylinder (4), under a pressure increasing along the cylinder (4),
c) the thoroughly mixed polymer melt is conveyed through an additional mixing stage (15) which is equipped with a regulable heating and cooling system and is bounded by a first and a second melt pump (14, 17), wherein a single-phase melt is produced, which
d) is lowered in the additional mixing stage (15) to a temperature below the initial processing temperature of the at least one polymer and/or its pressure is increased by means of the first and second melt pumps (14, 17) before it
e) is forced at a settable pressure through the nozzle (18) by means of the second melt pump (17).

7. Method according to claim 6, **characterised in that** in the additional mixing stage (15) the melt is lowered to a temperature of at least 50° C, preferably to at least 100° C, below the initial processing temperature of the at least one polymer.

8. Method according to claim 6, **characterised in that** in the additional mixing stage (15) the pressure of the melt is increased to more than 150 bars, preferably to at least 400 bars.

9. Method according to claim 6, **characterised in that** the polymer melt is charged with liquefied cell formers.

10. Method according to claim 6 and 9, **characterised in that** in the polymer melt is charged with carbon dioxide and water as cell former.

11. Method according to claims 6 to 10, **characterised in that** the polymer melt is produced from at least one thermoplastic polymer which is selected from the group consisting of cellulose derivatives, polyolefines, polyesters, polysulfones, polyethersulfones, polyamides and substitute products thereof.

12. Device for carrying out the method according to claim 6, consisting of an extruder (1), which is equipped with a metering device (5) for polymers and with heating elements (8), with a cylinder (4) which is connected by way of a first melt pump (14) with a nozzle (18) for extrusion of a membrane and which has in front of the first melt pump (14) an injection stage (9) for charging the polymer melt with cell formers,
**characterised in that** the injection stage (9) is arranged in the region between the second and last third of the length of the cylinder (4) and a heat exchange pipe, which is bounded towards the nozzle (18) by a second melt pump (17) and which is equipped with a regulable heating and cooling system, for provision of an additional mixing stage (15) for formation of a single-phase melt is installed between the first melt pump (14) and the nozzle (18) and a pressure differing from the pressure within the additional mixing stage is settable between the second melt pump and the nozzle.

13. Device according to claim 12, **characterised in that** the heat exchange pipe (15) is equipped with mixing elements for the polymer melt, preferably in the form of a static mixer.

14. Device according to claim 12, **characterised in that** the injection stage consists of metering pumps (10) which are connected by way of hollow needles (11) and sintered plates (12) with the cylinder (4) of the extruder (1) to be in communication therewith.

15. Device according to claim 12, **characterised in that** the metering pumps (10) are, for metering of liquefied cell formers, equipped with coolable pump heads.

16. Device according to claim 12, **characterised in that** the nozzle (18) is constructed as a wide-slot nozzle for the extrusion of flat membranes.

## Revendications

1. Membranes poreuses expansées constituées de polymères thermoplastiques,
**caractérisées en ce que** les membranes présentent
un pourcentage de cellules ouvertes d'au moins 80 %,
un volume de vide d'au moins 75 %, et
une répartition des grosseurs de pores ouverts avec un écart-type de +/- 10% du diamètre de pores moyen.

2. Membranes poreuses expansées selon la revendication 1,
**caractérisées en ce que** les membranes présentent
un diamètre de pores dans le domaine de la microfiltration entre 0,05 µm et 30 µm.

3. Membranes poreuses expansées selon la revendication 1,
**caractérisées en ce que** les membranes présentent
un diamètre de pores dans le domaine de la macrofiltration entre plus de 30 µm et 200 µm.

4. Membranes poreuses expansées selon les revendications 1 à 3,
**caractérisées en ce que** les membranes
sont renforcées d'un côté ou des deux côtés.

5. Membranes poreuses expansées selon les revendications 1 à 4,
**caractérisées en ce que** les membranes
sont constituées d'au moins un polymère thermoplastique, qui est choisi dans le groupe des dérivés de la cellulose, des polyoléfines, des polyesters, des polysulfones, des polyéthersulfones, des polyamides et de leurs produits de substitution.

6. Procédé de fabrication de membranes poreuses expansées constituées de polymères thermoplastiques, dans lequel une masse polymérique fondue constituée d'au moins un polymère amorphe et/ou semi-cristallin est transportée à une température de transformation d'origine, qui se trouve au-dessus de la température de ramollissement d'au moins un polymère, sous une pression d'au moins 150 bars, à travers une extrudeuse (1), se trouve chargée dans un étage d'injection (9) avec un porogène et est pressée à travers une filière formant la membrane (18), dans lequel le porogène fait mousser sous l'effet de la chute de pression se produisant lors de la traversée de la filière (18) la masse polymérique fondue constituée d'au moins un polymère,
**caractérisé en ce que**
a) à l'étage d'injection (9), qui se trouve dans la zone située entre le deuxième et le dernier tiers du cylindre (4) de l'extrudeuse (1), un excès de porogène est injecté dans la masse polymérique fondue en fonction des conditions de température et de pression régnant dans cette partie, et on utilise comme porogène au moins deux gaz ou au moins deux liquides à bas point d'ébullition ou un mélange d'un gaz et d'un liquide à bas point d'ébullition présentant des vitesses de diffusion différentes par rapport à la masse polymérique fondue, et
b) la masse polymérique fondue chargée avec l'excès de porogène est transportée et brassée dans une première zone de mélange (13) qui s'étend de l'étage d'injection à l'extrémité du cylindre (4) sous une pression qui augmente le long du cylindre (4),
c) la masse polymérique fondue brassée est transportée à travers un étage de mélange supplémentaire (15) qui est équipé d'un système de chauffage et de refroidissement réglable et est délimité par une première et une deuxième pompes de masse fondue (14, 17), une masse fondue monophase se trouvant ainsi produite, dont
d) la température est abaissée dans l'étage de mélange supplémentaire (15) à une valeur inférieure à la température de transformation d'origine d'au moins un polymère et/ou la pression est augmentée au moyen de la première et de la deuxième pompes de masse fondue (14,17), avant d'être
e) pressée au moyen de la deuxième pompe de masse fondue (17) avec une pression réglable à travers la filière (18).

7. Procédé selon la revendication 6,
**caractérisé en ce que**
dans l'étage de mélange supplémentaire (15), la température de masse fondue est abaissée à une valeur d'au moins 50°C, de préférence d'au moins 100°C inférieure à la température de transformation d'origine d'au moins un polymère.

8. Procédé selon la revendication 6,
**caractérisé en ce que**
dans l'étage de mélange supplémentaire (15), la pression de la masse fondue est portée à plus de 150 bars, de préférence à au moins 400 bars.

9. Procédé selon la revendication 6
**caractérisé en ce que**
la masse polymérique fondue est chargée avec des porogènes liquéfiés.

10. Procédé selon les revendications 6 et 9,
**caractérisé en ce que**,
la masse polymérique fondue est chargée avec du dioxyde de carbone et de l'eau comme porogène.

11. Procédé selon les revendications 6 à 10,
**caractérisé en ce que**
la masse polymérique fondue est produite à partir d'au moins un polymère thermoplastique qui est choisi dans le groupe des dérivés de la cellulose, des polyoléfines, des polyesters, des polysulfones, des polyéthersulfones, des polyamides et de leurs produits de substitution.

12. Dispositif pour la mise en oeuvre du procédé selon la revendication 6, constitué d'une extrudeuse (1) équipée d'un dispositif doseur (5) pour les polymères et d'éléments de chauffage (8) avec un cylindre (4), qui est relié par l'intermédiaire d'une première pompe de masse fondue (14) à une filière (18) pour l'extrusion d'une membrane et possède, avant la première pompe de masse fondue (14), un étage d'injection (9) pour le chargement de la masse polymérique fondue avec des porogènes,
**caractérisé en ce que**
l'étage d'injection (9) est disposé dans la zone située entre le deuxième et le dernier tiers de la longueur du cylindre (4), et
entre la première pompe de masse fondue (14) et la filière (18), un tube d'échange thermique délimité par une deuxième pompe de masse fondue (17) en direction de la filière (18) équipé d'un système de chauffage et de refroidissement réglable pour la constitution d'un étage de mélange supplémentaire (15) est installé pour la formation d'une masse fondue monophase et entre la deuxième pompe de masse fondue et la filière une pression différente de la pression régnant à l'intérieur de l'étage de mélange supplémentaire peut être réglée.

13. Dispositif selon la revendication 12,
**caractérisé en ce que**
le tube d'échange thermique (15) est équipé d'éléments de mélange pour la masse polymérique fondue, de préférence sous la forme d'un mélangeur statique.

14. Dispositif selon la revendication 12,
**caractérisé en ce que**
l'étage d'injection est constitué de pompes doseuses (10), qui sont reliées de manière communicante par l'intermédiaire de canules (11) et d'une plaque frittée (12) avec le cylindre (4) de l'extrudeuse (1).

15. Dispositif selon la revendication 12,
**caractérisé en ce que**
les pompes doseuses (10) sont équipées de têtes de pompes pouvant être réfrigérées pour un dosage de porogènes liquéfiés.

16. Dispositif selon la revendication 12,
**caractérisé en ce que**
la filière (18) est conçue comme une filière à fente large pour l'extrusion de membranes plates.
